Europäisches Patentamt

European Patent Office

Office européen des brevets

(11) Publication number: **0 333 492 B1**

# EUROPEAN PATENT SPECIFICATION

(45) Date of publication of patent specification: **10.05.95**  (51) Int. Cl.⁶: **B29C 61/06**, B29C 55/06, B29C 71/04

(21) Application number: **89302636.9**

(22) Date of filing: **17.03.89**

(54) **Heat shrinkable wraps.**

(30) Priority: **18.03.88 US 170177**

(43) Date of publication of application:
**20.09.89 Bulletin 89/38**

(45) Publication of the grant of the patent:
**10.05.95 Bulletin 95/19**

(84) Designated Contracting States:
**AT CH DE ES FR GB LI SE**

(56) References cited:
FR-A- 2 452 375     GB-A- 1 161 259
US-A- 2 631 954     US-A- 3 022 543
US-A- 3 949 110     US-A- 4 336 212
US-A- 4 590 020

**WORLD PATENTS INDEX Section Ch, Week
8011, Derwent Publications Ltd., London, GB;
Class A, AN 80-18956C & JP-A-54 150 478
(ASAHI DOW KK) 26 November 1979**

(73) Proprietor: **THE KENDALL COMPANY
15 Hampshire Street
Mansfield,
Massachusetts 02048 (US)**

(72) Inventor: **Doheny, Anthoney J.
11 Hammond Road
Natick
Massachusetts 01760 (US)**

(74) Representative: **Kearney, Kevin David
Nicholas et al
KILBURN & STRODE
30 John Street
London, WC1N 2DD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

The present invention relates to heat shrinkable films and to adhesive tapes having a heat shrinkable backing. More particularly, it relates to heat shrinkable pipewraps, e.g. for protecting from environmental forces and stresses the joints or welds of pipelines such as those contemplated for inground implantation.

The concept of preparing heat shrinkable films is per se well known and the patent literature is replete with references thereto. In general, the prior procedures include the steps of crosslinking, e.g. chemically or by irradiation, and stretching to orient. The use of so-called shrinksleeves or heat shrinkable films and tapes for pipejoints or other tubular articles is also well known in the art.

While not intended to be construed to be a comprehensive survey of the art, the following patents are nevertheless considered to be illustrative.

U.S.P. 3,022,543 relates to a shrinkable film for packaging foodstuffs produced by the steps of: (1) stretching a polymer such as polyethylene above room temperature in at least one direction; (2) cooling to at least room temperature; (3) irradiating, preferably with electrons at a specified dosage; (4) heating the irradiated film to a temperature where it will soften sufficiently to stretch; (5) bilaterally stretching to orient the polymer at this elevated temperature; and (6) cooling while under tension.

U.S.P. 3,144,398 relates to the preparation of irradiated polyethylene which can be readily changed from a stretched to a shrunken condition. The objectives are said to be accomplished by cold stretching the polyethylene at a temperature of 65°C, and then irradiating at a specified dosage, preferably with electrons.

U.S.P. 3,144,399 relates to an irradiated, biaxially oriented polyethylene stretched at least 100% in each direction and below the break limit. The polyethylene is first irradiated at a specified dosage, then heated to or beyond its transparent point, and stretched to orient. The stretched condition is maintained while cooling to room temperature.

U.S.P. 3,455,337 relates to a differentially irradiated crosslinked polymeric heat recoverable article, tubing being particularly disclosed, characterized by containing a sufficient crosslink density near one surface to be substantially infusible and containing a gradual decreasing density of crosslinking throughout its thickness, the opposed surface being substantially non-crosslinked. As is described therein, the article is formed by first subjecting it to a dosage of irradiation insufficient to render the opposed surface infusible. Once the tubing has been differentially crosslinked, it is heated and subjected to differential pressure between the inside and the outside, the pressure being sufficient to cause the tube to expand in a controlled fashion.

U.S.P. 3,886,056 has for its objective to prepare from polyethylene having a high crystallinity a polyethylene having highly raised melting and softening temperatures, improved transparency and excellent dimensional stability at high temperatures. This objective is said to be accomplished by irradiating with a dosage of 0.2-16 Megarads to produce a crosslinked polyethylene having a gel content of at least one weight percent; extending the crosslinked polymer in at least one direction at a temperature of at least the anisotropic melting point; and then cooling.

U.S.P. 3,949,110 discloses a method of making a heat shrinkable tubing including the steps of irradiating the tube, heating to at least the softening temperature, partially inflating, and then thermosetting by cooling.

U.S.P. 3,988,399 relates to heat recoverable wraparound sleeves for pipejoints, cables, wire splices and the like which possess the ability to curl in involute fashion upon the application of heat. As is disclosed, for example, in Col. 6, one or both of the primary exterior faces can be coated with a suitable adhesive.

U.S.P. 4,348,438 discloses a process for preparing shrink wraps from a homopolymer of ethylene or a copolymer of ethylene with up to 20 weight percent of one or more other monomers. As disclosed, the film is uniaxially cold-oriented at a temperature of at least 5°C below the film's melting point, irradiated with ionizing radiation and sealed along a seam running perpendicular to the direction of orientation. The irradiation, which is preferably carried out before the orientation, is at a dosage of 1-20 Megarads, about 3 to 5 Megarads being stated to be preferred.

U.S.P. 4,469,742 relates to a multilayer cook-in shrink film comprising: (1) a specified sealing layer; (2) a shrink layer; (3) a specified adhesive layer; (4) a barrier layer; (5) another adhesive layer; and (6) an abuse layer, the respective layers being melt bonded and irradiated to crosslink sufficient to resist delamination during use.

U.S.P. 4,517,234 relates to a flat length of heat recoverable material having integral latching means so that the material can be wrapped around cable, pipe, etc., latched and then shrunk.

U.S.P. 4,521,470 relates to a system for enclosing an object by installing consecutively or as a single article: (a) a heat-softenable adhesive; (b) a specified thermoplastic polymeric material; and (c) a heat-recoverable cover, and thereafter heating to cause recovery (shrink).

U.S.P. 4,590,020 teaches an oriented high density polyethylene film having maximum crosslinking at the surfaces and minimum crosslinking inwardly. The film is prepared by crosslinking opposed surfaces by irradiation with electron rays in such a manner that the degree of crosslinking decreases from the surfaces inwardly so that the outer layer portions have gel fractions between 20-70% and the middle layer portion has a gel fraction between 0-5%; and thereafter heating and stretching to orient and produce a film between 10-50 microns. As stated in Col. 3, both sides should be irradiated with the same dosage, the penetrating power of the electron rays being properly adjusted according to the thickness by changing the applied voltage or by using a shield.

In general, the present invention is directed to novel procedures for preparing heat shrinkable films and tapes which provide the advantages which will be described hereinafter. It is particularly directed to providing heat shrinkable films and tapes which are useful as protective wraps for tubular metal articles such as pipes, e.g. pipelines intended for ground implantation, as well as for cables, wire splices, and the like. The invention will accordingly be discussed in detail hereinafter with reference to pipewraps, a primary object of this invention.

As alluded to above, it is well known in the art to provide an overwrap for pipelines in order to protect them from degradative stresses and forces after placement in the ground. An efficacious protective wrap of this description will in general comprise a rubber-based adhesive on the pipe surface and an outer corrosion and weather resistant film overlying the adhesive layer. Typically, this is accomplished by a protective adhesive wrap comprising a rubber-based adhesive carried on a polyolefinic film backing, optionally, a primer coating may first be applied to the pipe surface in order to increase adhesion.

It would be most desirable to provide a so-called shrinkwrap of this description to insure complete adhesion of the tape to the pipe and thus avoid problems such as spiral void, as will be discussed in more detail hereinafter. However, prior systems for providing a polyethylene or other polyolefinic shrink-wrap have proved inadequate for various reasons.

As is well known, a polyolefinic film which has been oriented by stretching in the machine direction will shrink when heated above its crystalline melting point, due to the relaxation of the orientation. However, this concept is not in itself practical for preparing shrinkwraps for pipes. The film backing for the adhesive will have no equilibrium or "rubbery" modulus above its melting point to generate the stresses necessary for adhesive flow. Accordingly, the tape will pull itself apart when it shrinks against a constraint, e.g. a pipe joint.

For example, a blend of a high and a low density polyethylene such as the backing on a "980" adhesive tape (trade designation of The Kendall Company, assignee of the instant invention), comprising a high density (HDPE) : low density (LDPE) polyethylene blend, will begin to shrink when heated above the low density peak, but it will maintain some strength if the shrink temperature is below the melting point of the HDPE. This could in theory be useful if the shrink temperature could be controlled to a narrow range of about 10-15°C between the two melting endotherms. However, this is not viable in contemplated commercial applications of heat to shrink the film.

It is also known that crosslinking will impart strength above the melting point of the polyolefinic film. For instance, a method of imparting strength to the polyethylene above its melting point(s) is to crosslink so that the film's 100% modulus at 150°C is between 7000 and 70,000 kg/m$^2$ (10 and 100 pounds per square inch (psi)). This has not previously been attractive for commercial production, since the uniform crosslinking of the thick polyethylene which would be utilised requires very high energy electron beams for the irradiation which in turn would be both expensive and require considerable manufacturing floor space for radiation shielding.

A primary object of this invention, accordingly, is to provide a heat shrinkable polyolefin film which either carries an adhesive layer, i.e. in the form of an adhesive tape, or which can be adhered securely over an adhesive layer applied in a separate step around the pipe or pipe joint. Another object is to provide novel procedures for preparing heat shrinkable adhesive tapes, which procedures are simple, cost-effective and produce tapes possessing the adhesion and physical characteristics for protecting articles from the degradative environmental forces and stresses to which they are subjected in use.

In accordance with the present invention there is provided a process for preparing a heat shrinkable film which comprises forming a film of polyolefinic material, exposing both sides of the film to electron rays, and subjecting the film to orientation by stretching characterised in that the film of polyolefin material is made by calendering by depositing a mass of polyolefinic material at the nip of the first and second rolls of a three-roll calender in which the second and third rolls rotate at approximately the same speed and the first roll rotates at a slower speed, the said first roll being heated to a temperature above the melting point of the said polyolefinic material, the said second roll is heated to an elevated temperature below the melting point of the said polyolefinic material, and the said third roll is chilled relative thereto;

extruding the said mass of polyolefinic material between the said first and second rolls to form a film adhering to the surface of the said second roll;

transporting the said film from the said second roll around the said third roll;

transporting the said film from the said third roll of the said calender under tension, whereby to effect partial orientation of the said film in the machine direction and to maintain substantially all the molecular orientation imparted to the said film during the calendering steps; the film preferably being 55 to 127 micrometres (30 to 50 mils) thick;

passing the said film in the path of irradiation from a low energy electron beam while subjecting one surface of the said film to the said irradiation at a voltage such that the radiation dose at the half-depth of the said film is approximately one-half the dose at the said irradiated surface and at a selected current to film speed ratio;

preferably cooling the irradiated film to below about 100°F (38°C);

passing the said film in the path of irradiation from a low energy electron beam while subjecting the opposed surface of the said film to the said irradiation at a voltage and at current to speed ratio substantially equal to that selected for the irradiation of the said one surface, such that the 100% modulus at 150°C of the said film as a whole is from 7000 to 70,000 kg/m$^2$ (about 10 to 100 pounds per square inch) and the said film is substantially uniformly cross-linked throughout its thickness; and

molecularly orientating the said film by stretching in the machine direction preferably at a temperature of about 90°C to about 160°C, for example this step being performed while the said film is at a temperature where it is softened, to provide a shrinkability of at least 25 percent, preferably at least about 30 percent upon heating the said film in an absence of constraints; and thereafter preferably cooling said film under tension to maintain said stretched condition.

The term "100% modulus at 150°C" means the modulus value of the material when at a temperature of 150°C and when at 100% elongation.

In the preferred embodiment of this invention, a rubber-based adhesive is thereafter applied to form a tape.

In order to prevent corrosion and/or other degradative forces from attacking pipelines, it is common practice to apply a protective cover to the surface of the pipe. While in its simplest form, this protective cover could be an anticorrosion coating, for optimum longevity, especially for inground pipelines, the protective system will at least consist of an outer film or adhesive tape which is typically spirally wound around the pipe. For reasons which will be apparent, such an outer wrap is generally referred to in the pipeline protection art as a "pipewrap".

In a typical anticorrosion system currently in use, a primer coating is first applied to the surface of the pipe and over this primer coating a pressure-sensitive tape having a tough, abrasion-resistant backing is then wound. In this typical pipeline laying system, sections of pipe of predetermined length, e.g. on the order of 12 metres (40 feet), and having a pipewrap of the foregoing general description are assembled in the field for inground implantation.

If the end sections to be abutted and joined are so wrapped, these end sections are stripped of the protective wrap and then welded together. A protective wrap is then placed over this pipe joint and adjacent portions of the respective pipewraps in order to secure the weld or pipejoint, which can be said to be the weakest link in the pipeline and hence requires the most protection from environmental forces and stresses.

Whether it be the pipewrap extending along the length of the individual pipe sections or the wrap covering the joint between adjacent pipe sections, it can be stated in general that the anticorrosion protective tapes that are applied to inground pipeline structures are often subjected to rather severe long-term shearing forces derived from the surrounding soil. The magnitude of these shearing forces depends on several factors, including among others: (a) the type of soil; (b) the tectonic forces surrounding the implanted pipeline; (c) the size of the pipe; (d) axial site emplacement; and (e) the range of thermal expansion as well as the pipe contents.

The result of the long-term shear forces on a pipeline protective coating is referred to as "soil stress". Soil stress on an anticorrosion protective coating generally results from the structural shear forces which cause the protective coating to creep along the pipeline peripheral surface. Creep is in essence a long-term visco-elastic, or "cold flow" phenomenon, common to all polymeric substances. The amount of creep will depend upon the physical properties of a coating. Since the physical properties, (i.e. modulus) of a coating will be temperature dependent, temperature becomes a decisive element in determining the amount of creep. At low temperatures, the propensity to creep will be substantially reduced, while at elevated temperatures, the likelihood of creep will be significantly increased, other factors remaining the same.

The prior art has addressed these problems with various chemical approaches directed to improving the cohesive nature of the adhesive, thereby increasing the resistance to shear and creep.

However, improvements in the chemistry of the adhesive sytem cannot be a total solution to the problems created by soil stress and creep. The physical characteristics and/or geometry of the pipe-wrap inherently provide areas of the pipe which are not adequately adhered to the tape. This is true even if the pipe surface is smooth and uniform.

When the tape is wound over the surface of the pipe, an overlap area is created where the thickness of this overlap area is equal to twice the thickness of the tape. The overlap runs a spiral path along the length of the pipe, and the presence of this sprial overlap poses three problems which may compromise the protective function of the tape over the pipe surface:

(1) the thickness differential projected at the surface of the overlap results in increased frictional resistance when the pipe moves against the soil and/or against any support skids, which high frictional resistance may result in a failure of the overlap bond and/or wrinkling of the tape, thereby ultimately permitting liquid to corrode and damage the pipe;

(2) the thickness differential at the underside (bottom) of the overlap results in the formation of an interstice at the termination of the lower adherent (tape wound around the pipe), which interstice running along the length of the pipe as a spiral is called the "spiral void", the presence of which eventually results in corrosion of the metal pipe; and

(3) when the protective tape is subjected to the action of soil stresses and application tensions (residual stresses), the overlap bond is pulled apart; severe cleavage stresses are induced at the terminal points of the overlap when it is pulled apart in this fashion, causing a stress concentration on the overlap edges which may result in failure of the overlap bond.

The physical problems such as spiral void can in theory be substantially eliminated if the adhesive wrap could be adhered completely to the underlying substrate. However, this is not feasible with the wrapping operations which would normally be applied in the field.

The principles of shrink wraps, such as are commonly employed with thin films for packaging of foodstuffs, would theoretically provide a solution to this problem. However, no satisfactory method of applying the principles of heat shrinkable films to pipewraps has heretofore been known in the art.

As mentioned, from a chemical standpoint, the most effective anticorrosion coating system for resisting environmental forces such as soil stresses utilizes a rubber-based adhesive and a polyolefinic outer wrap or adhesive backing.

A typical rubber-based adhesive for this purpose may, for example, include a blend of virgin butyl rubber, reclaimed butyl rubber and/or natural butyl rubber along with tackifiers, fillers and various other additives performing specific desired functions, e.g. antioxidants, bactericides, crosslinking agents, etc.

It may, for example, be a rubber-based adhesive such as is described in U.S.P. 4,268,334 issued to George M. Harris and Samuel J. Thomas or U.S.P. 4,472,231 issued to Robert F. Jenkins, both of which are assigned to the assignee of the instant invention.

Preferred backing materials are the polyolefins, particularly homopolymers or copolymers of ethylene, including blends of polyolefins with other polyolefins and/or other polymeric materials.

As previously stated, the present invention is directed to heat shrinkable films and tapes which are particularly useful in obviating the above-mentioned problems in protecting pipelines, particularly those which are subjected to the above noted inground environmental stresses. It will however be appreciated by those skilled in the art that these films and tapes will also find utility in other applications such as, for example, protective wraps for cables, wires, wire splices, and the like.

The present invention is also directed to novel processes for preparing heat shrinkable films and tapes, which processes lend themselves.

As previously stated above in accordance with these novel procedures, a heat shrinkable film is provided by the steps of:

(1) initially forming a film of polyolefinic material by depositing a mass of said material at the nip of the first and second rolls of a three-roll calender in which the second and third rolls rotate at about the same speed and the first roll rotates at a slower speed, the top roll is heated to a temperature above the melting point of the polyolefinic material, the middle roll is heated to an elevated temperature below its melting point, and the bottom roll is chilled relative thereto;

(2) extruding the polyolefinic mass between the first and second rolls to form a layer adhering to the surface of the second rolls;

(3) transporting said film from the second roll around the third roll;

(4) transporting said film from said calender under tension, whereby to effect partial orientation in the machine direction and to maintain substantially all the molecular orientation imparted during calendering;

(5) subjecting one surface of said film to irradiation from a low energy electron beam at a voltage such that the radiation dose at the half-depth of the film is approximately one-half the dose at the irradiated surface and at a current film surface speed ratio such that the surface dose would effect cross-linking sufficient to impart to said film a 100% modulus at 150°C of from about 10 to 100 pounds per square inch, if the dose at any depth in the film were substantially equal to said surface dose;

(6) cooling the irradiated film to below about 100°F (38°C);

(7) subjecting the opposed surface of said film to said irradiation from a low energy beam at a voltage and at a current to speed ratio substantially equal to that in the preceding step (5), such that the 100% modulus at 150°C of the film as a whole is from about 10 to about 100 pounds per square inch and said film is characterized as being substantially uniformly cross-linked throughout its thickness;

(8) molecularly orientating by stretching said film in the machine direction (MD) at a temperature of about 90°C to about 160°C to provide a shrinkability of at least about 25 percent upon reheating under no constraints; and thereafter

(9) cooling said film under tension to maintain said stretched condition.

Each of the calendering, irradiation and orientation steps are critical in the practice of this invention.

With respect to the calendering step for first forming a film from a mass of polyolefinic material, it has been found to be essential that the film be formed initially on the described 3-roll calender, which calender is disclosed, for example, in U.S.P. 2,631,954. The reason for this criticality is not clearly understood, but it is believed to be due, at least in part, to the significant orientation which occurs as a function of the described calendering operation, and at least in part due to the physical properties of the film formed in this operation.

As was mentioned, the top (first) roll of the calender is heated above the melting point of the particular polyolefinic material employed to prepare the film. By way of illustration, with polyethylene a temperature of at least 270°F (132°C) would be utilized for this roll. The middle or second roll is heated to an elevated temperature below the melting point of the polymer, e.g. on the order of 190°F (88°C) for polyethylene. Preferably the heating of these two rolls is done internally. The third or bottom roll of the calender will be chilled relative thereto, e.g. to a surface temperature on the order of from about 50 to about 70°F (10°C to 21°C).

Also as was stated above and in the aforementioned patent, the second and third rolls are rotated at about the same speed and the first roll is rotated at a slower speed. While the U.S.P. 2631954 speaks of a speed ratio of the second to first roll of from 5:1 to 30:1, in accordance with the present invention, the speed will preferably be adjusted to a higher ratio, e.g. from about 10:1 to about 325:1.

Since the films of this invention should ideally have a thickness after orientation and stretching of on the order of 30-50 mils (0.76 to 1.27 mm), it will be appreciated that the nip or gap between the rollers will be adjusted accordingly to provide a film which prior to orientation is appropriately thicker. As will be understood, the particular thickness will be dependent upon the amount of stretching needed and therefore is not susceptible to precise quantification. However, the desired thickness to be obtained in this calendering operation may be readily calculated by those skilled in the art by determining the delta (difference) in thickness before and after orientation and thus ascertaining the initial thickness needed to provide a film of a given thickness after stretching.

In operation, the desired gap is ascertained and a bank of the polyolefinic material is deposited between the nip of the first and second rollers. This mass of material is extruded between the two rollers to form a layer adherent to the surface of the second roller. It is then carried to the third roller where it is stripped from the second roller. It then passes around the third roller to a takeup roll. The resulting film is observed to have different surface characteristics. While the surface adhering to the second roll is smooth, the opposed surface is rougher and has a matt appearance. As is explained, for example, in Col. 4 of U.S.P. 2,631,954, the upper roll surface, advancing at less speed, causes drag on the material so that the upper surface of the sheet comes off the upper roll at a speed greater than the speed of the upper roll, causing the roughness as well as a difference in the degree of molecular orientation through the thickness of the sheet with an internal molecular orientation greater than the molecular orientation at the smooth surface. Thus the said film coming off said first roll is preferably further characterized in that the surface adhering to the said second roll is smooth, the opposed surface of the said film is rougher and has a matt appearance, and the said film is further characterized in that the internal molecular orientation of the said film formed by the said calendering steps is greater than the molecular orientation at the said smooth surface of said film. [While not wishing to be limited to any particular theory, it is believed that this difference in degree of molecular orientation may at least in part explain the superior results in terms of end product obtained with this specific calendering operation to form the film as distinguished from other means by which the film may be formed, e.g. extrusion, a different type of calender, etc.]

In any event, preparing the film in this manner has been found to provide a molecular orientation in the machine direction which, while significant, is not completely relaxable after the appropriate degree of crosslinking and will not provide a shrink film which, upon application of heat in known manner will shrink the desired amount in accordance with this invention, namely at least 25 percent under no constraint.

Another critical aspect of this invention is the crosslinking step necessary to impart dimensional stability to the film. While significant orientation will occur during the aforementioned calendering operation, the resulting film lacks the dimensional stability needed to provide a useful heat shrinkable film. For instance, while the orientation in this manner may provide an orientation substantially equivalent to stretching in the range of 100% elongation to 400% elongation, the resulting film will possess an elastic memory to impart shrinkability but will fall part. Accordingly, it will be useless for its contemplated purpose. For this reason, crosslinking is required.

In accordance with this invention, the requisite crosslinking is obtained in what may be termed a two-stage process utilizing low energy radiation. Conceptually, it may be possible to use either neutral particles, charged particles, or electromagnetic radiation to effect the crosslinking. However, the preferred source is low energy electron beam (EB).

In the practice of this invention, the sum total of the crosslinking should provide a substantial depth-wise uniformity in crosslinking in order to prevent tensile rupture in areas throughout the thickness of lesser crosslinking. The radiation to produce this uniform crosslinking may be accomplished by irradiating each surface of the film with low energy radiation preferably first one surface and then the other, the sum total being sufficient to provide the uniform crosslinking and a hot modulus (at 150°C) of from about 7000 to 70,000 Kg/m² (10 to about 100 psi), preferably about 10545 to 35150 Kg/m² (15 to about 50 psi).

The modulus may be determined utilizing per se known instrumentation and techniques. One procedure, for instance, utilizes an Instron in which a piece of film, say, for example, 1" x 4" (2.5 x 10 cms) is stretched to 8" (20 cms), held at that length for about one minute and the amount of force required to hold it at this distance is then calculated.

The radiation required to provide a given modulus within the recited range is not capable of precise quantification since it will be understood that it is dependent upon such variable factors as line speed through the irradiation source, film weight (grams per square meter), film composition, etc. However, the needed radiation may be readily calculated by the skilled practitioner, based upon dosage determined by routine experimentation within the expected judgement of the skilled worker having before him the foregoing description.

Once the dosage required to effect the required crosslinking on the film surface is determined, the treatment voltage for each side in the two-stage irradiation will be such that the midpoint of the thickness for each treatment will receive approximately 50% of the surface dose. In this manner, following the two-stage irradiation wherein each surface is irradiated, the middle portion of the film thickness will have received approximately the same dosage as each surface.

By way of illustration, to crosslink a polyolefinic film on the order of 30-50 mils (0.76 to 1.27 mms) thick and travelling at a line speed on the order of 30-40 feet per minute (9.1 to 12.2 metres/min), a surface dosage of on the order of 15-20 Mrads with a penetrating potential of on the order of 150-300 kilovolts and a dose current of on the order of 1.6 to 2.0 milliamps per inch width (0.63 to 0.79 milliamps per cm width) has been found effective to provide the desired modulus.

Since such radiation treatment provides a surface temperature of on the order of 180°F (82°C), it is preferred not to subject each film surface to irradiation simultaneously. Accordingly, after the initial surface irradiation, i.e. after irradiating the first film surface, it is preferred to allow the partially irradiated film to cool, e.g. below 100°F (57°C) before irradiating the opposed surface.

To recapitulate, crosslinking is effected with low energy radiation in a two-stage system wherein in the first step, one surface is irradiated at a dosage sufficient to provide the desired crosslinking at the irradiated surface and about one-half the dosage required to obtain the same degree of crosslinking at the midpoint of the film thickness; and in the second step, the opposed surface is subjected to the same degree of radiation dosage so that the sum total of the two radiation stages provides about the same degree of crosslinking in the middle portion of the film thickness as on either surface.

The final step in the preparation of the heat shrinkable films of this invention is the molecular orientation or stretching in the machine direction necessary to impart the desired degree of shrinking upon application of heat to relax the film and thus allow the elastic memory to permit at least partial recovery of the film length.

For practical applications in the protection of pipelines, the film should have the capability of shrinking at least 25% and, most preferably, on the order of 30 to 50%. However, as previously mentioned the film has received an initial orientation during the calendering operation. For example, it may, after calendering, have the capability of shrinking, say, from 100 units to 85 units with a corresponding increase in width (cross direction) of from, say, 100 units to 106 units. In this hypothetical, a further machine direction stretching of 100 to 125 units at substantially constant width would be required to provide a film capable of shrinking 32% upon heating, i.e. from 100 units to 68 units.

Orientation to effect stretching may be accomplished in per se known manner by heating to soften, e.g. to a temperature on the order of 90°C to 160°C and then applying the required amount of tension in the machine direction to cause the desired elongation. While maintaining this tension, the film is then cooled down to prevent recovery. The tension is then released.

To prepare a heat shrinkable tape, a suitable adhesive may then be applied on one surface, e.g. by extrusion coating or other known coating techniques. Preferably, a low temperature adhesive will be employed to minimize relaxation of the orientation during the coating step for applying the adhesive to the shrink-able film backing. The particular materials which may be selected in the practice of this invention may be any of these heretofore known in the art for preparing heat shrinkable films and pipewraps. Accordingly, this selection per se comprises no part of the present invention and may, to a degree, be a matter of individual choice.

By way of illustration, however, the polymers which may be employed are in general characterized as being heat shrinkable (or heat recoverable, as they are sometimes referred to in the art) materials having the properties of elastic memory imparted to them by the crosslinking and orientation. The preferred materials are polyolefinic e.g. the polyethylenes, e.g. low density polythylene (LDPE), medium density polyethylene (MDPE), high density polyethylene (HDPE), very low or ultra low density polyethylene (VLDPE), and linear low density polyethylene (LLDPE), including blends thereof.

As examples of other useful polymers which may be used alone or in combination with polyethylene, mention may be made of ethylene vinyl acetate copolymers, ethylene propylene rubber, EPDM, polypropylene, polyvinyl chloride, polyisobutylene, conjugated diene butyl, butyl rubber, etc.

The polymers may, if desired, be blended to form a mixture of polymers along with other reagents performing specific desired functions for the film, e.g. a colourant such as carbon black. This blending may be done, for instance, in a 2-roll mill and the resulting blend, in its heated condition, may then be transported to the calendering operation.

In like manner, the particular adhesives employed may be selected from those heretofore employed in protective pipewraps, e.g. rubber-based adhesives such as those heretofore mentioned, asphalt-rubber adhesives, and the like. Since the adhesives which may be utilized in the practice of this invention may be any of those per se known and used in the adhesive tape art, e.g. the protective pipewrap art, the selection of the particular adhesive may be considered to be a matter of individual choice and per se comprises no part of this invention. In like manner, the particular adhesive thickness as well as the manner of application to the heat shrinkable film will be a matter of choice within the expected judgement of the skilled worker.

In general, thicknesses on the order of 30-40 mils are considered to be typical, although greater or lesser thicknesses are contemplated where found desirable or expedient to do so.

While casting, extrusion coating and the like may be utilized, calendering has been found to be a particularly efficacious method for applying the adhesive from a manufacturing standpoint.

While the preferred form of this invention is directed to heat shrinkable adhesive tapes, it is to be expressly understood that heat shrinkable films prepared by this invention are also highly useful. As is known, for example, a layer of a suitable adhesive, e.g. a rubber-asphalt adhesive layer on the order of 60 mils thick may first be applied to a metal pipe and the heat shrinkable film then spirally wound thereover to provide a protective wrap.

The following examples show by way of illustration and not by way of limitation the practice of this invention.

EXAMPLE 1

Low Density Polyethylene (LDPE) Film

This is a comparison example.

99 parts by weight of low density polyethylene (melt index 2.0 and specific gravity 0.920) and one part by weight of carbon black pigment along with 500 parts per million of an antioxidant of the thiobisphenol type were milled together and then calendered on a three-roll mill as previously described in which the second roll was rotated at a surface speed of about 27 feet per minute (fpm) (8.2 metres/min) and had a surface temperature of about 160°F (71°C); the first roll rotated at a speed of about 2 fpm (0.61 metres/min) and had a surface temperature of about 420°F (216°C); and the third roll rotated at about the same speed as the second roll and had a surface temperature of about 65°F (13°C), to provide a film approximately 36 mils (0.91 mms) thick and having an areal density of 849 grams per square meter (g/m$^2$). When heated to 300°F (149°C) for any length of time, the resulting film will shrink about 70% in the axial (machine) direction and expand 50% in the transverse (cross) direction and 100% in thickness.

However, the film has no strength at 150°C and accordingly is not useful as a shrink wrap.

EXAMPLE 2

LDPE/EVA Copolymer Film

This is a comparison example.

62.5 parts by weight of the low density polyethylene recited in Example 1, 35 parts by weight of a copolymer of ethylene and vinyl acetate containing 17% vinyl acetate (melt index 1.8, specific gravity 0.937) and 2.5 parts by weight of carbon black along with 520 ppm of the antioxidant described in Example 1 were milled together and then calendered on a three-roll calender as in the preceding example, except that the first roll had a surface temperature of about 415°F (213°C). The resulting film was approximately 34 mils (0.86 mms) thick and possessed an areal density of 796 $g/m^2$. When heated to 300°F (149°C) for any length of time, the film shrunk about 65% in the axial direction and expanded about 45% in the transverse direction and about 138% in thickness. However, as in Example 1, it had no strength at 150°C and accordingly was not useful as a shrink wrap.

The following two examples show by way of illustration the mental processes one may follow, if needed, to ascertain the proper irradiation conditions to be followed in accordance with the foregoing description.

EXAMPLE 3

This is a comparison example.

From standard curves for beam penetration as a function of electron beam voltage and areal density, it can easily be calculated that at 250 kV a bilateral irradiation of an 849 $g/m^2$ film (e.g. as prepared in Example 1) will produce a dose at the midline roughly 70% of the surface dose. A sheet of the film as prepared in Example 1 was irradiated on one surface at 250 kV on an Energy Sciences Electrocurtain at 30 fpm (9.1 metres/min) at five current densities ranging from 0.75 to 1.75 milliamps per inch (0.3 to 0.7 milliamps per cm). The nominal doses ranged from 9 to 21 MRad. The film was then cooled below 100°F (37°C) and the opposed surface of the film was then irradiated under the same processing conditions. The resulting sheets of film were tested for 100% modulus at 150°C and were found to exhibit an approximately linear variation of modulus with nominal dose given by:

$$M^{100} (150°C) = -10 + 1.5R$$

where $M^{100}$ (150°C) is the 100% modulus at 150°C in psi; and
R is the nominal dose in MRad.

Thus, for an $M^{100}$ (150°C) of 14060 $kg/m^2$ (20 psi), a dose of 20 Mrad is predicted. From data developed, such a sheet would have a 150°C shrink force of 22.3 g/cm (2 oz/in), an axial shrinkage of 14%, a transverse expansion of 8% and a thickness expansion of 9%. Such a film will find utility as a shrink film, but does not have sufficient shrink force or axial shrinkability to be useful as a shrink wrap for pipes and the like as contemplated by this invention.

EXAMPLE 4

This is a comparison example.

From standard curves for beam penetration as a function of electron beam voltage and areal density, it is calculated that at 250 kV a bilateral irradiation of a 796 $g/m^2$ film (e.g. as prepared in Example 2) will produce a dose at the midline roughly 85% of the surface dose. A sheet of film as prepared in Example 2 was irradiated on one surface at 250 kV on an Energy Sciences Electrocurtain at 30 fpm and at five current densities from 0.75 to 1.75 milliamps per inch. The nominal doses ranged from 9 to 21 MRad. The resulting sheets of film were tested for 100% modulus at 150°C and were found to exhibit an approximately linear variation of modulus with nominal dose given by:

$M^{100}$ (150°C) = -10.3 + 1.8 R. Thus, for an $M^{100}$ (150°C) of 14060 $kg/m^2$ (20 psi), a dose of 16.5 MRad is predicted. From data developed, such a sheet of film would have a 150°C shrink force of 22.3 g/cm (2oz/in), an axial shrinkage of 17%, a transverse expansion of 6% and a thickness expansion of 12%. As in the preceding example, this film will find usefulness as a shrinkable film from the standpoint of modulus, but again does not have sufficient shrink force or axial shrinkability to render it useful as a shrinkwrap for pipes as envisioned by the primary objective of this invention.

In the previous two examples, it will be seen that the resulting shrinkable films will not provide the requisite shrinkability upon orientation, i.e. a shrinkability of at least 30% upon reheating under no constraints. From the data generated and the observations learned, the following examples show by way of illustration the preparation of heat shrinkable wraps in accordance with the primary objectives of this invention.

EXAMPLE 5

This is a comparison example.

A sheet of film as prepared in Example 1 is irradiated on one surface while travelling beneath the Electrocurtain low energy electron beam at 35 fpm (10.7 metres/min), the irradiation being at 270 kV and 1.9 milliamps/in (0.75 milliamps/cm). The nominal dose was calculated at 19 MRad. The film was then cooled below 100°F (37°C) and the opposed surface was subjected to the same dosage. The dose at the sheet midline was now calculated to be roughly equal to the surface dose. The irradiated surface of the sheet reached a temperature over 180°F (82°C) during each pass and emerged from the processor at about 140°F (60°C). When wrapped in the roll the sheet temperature is between 90 and 100°F (32 and 37°C) and it was allowed to cool before irradiating the opposed surface. The value of $M^{100}$ (150°C) was measured at 18067 kg/m$^2$ (25.7 psi), the shrinkage force at 33.5 g/cm (3 oz/in), the axial shrinkage at 21%, and the transverse expansion at 9%. The modulus, $M^{100}$ (150°C), is higher because of the greater average dose, but the greater axial shrinkage is a result of the inevitable stretching occurring in pulling the hot sheet through the electron beam processor. It is to be noted, however, that absent the further orientation step which follows, the shrink force and axial shrinkage are still not high enough for the contemplated usage as a shrink wrap for metal pipes or other tubular articles.

## EXAMPLE 6

The irradiated sheet as prepared in Example 5 was subjected to a post drawing operation which is less drastic and easier to control from a manufacturing standpoint than the postdrawing (stretching) operations common to prior commercial production of shrinkable films. The sheet was run from a slow roll to a fast roll both running at a surface temperature of about 250°F (121°C) and a speed ratio of 1.33 and then cooled under tension. The differentially driven rolls were spaced less than 0.1 inch (2.54 mms) apart with the sheet S-wrapped over the rolls. The sheet loses 30% in thickness and 4% in width. The desired draw ratio was calculated from the following equation:

$$1 = \frac{l/lo}{D} = S$$

where S is the desired axial shrinkage for a shrink wrap; and l/lo is the axial ratio of crosslinked calendered sheet before drawing, i.e. 1-$S_o$, where $S_o$ is the axial shrinkage before drawing. In the instant example, the desired value of S = 40%, l/lo is 0.79. Accordingly, D should be 1.32. In this example, with D = 1.33 and l/lo = 0.79, the predicted value of S = 40.6%. The measured value was 40.8% with a transverse expansion of 15%, a thickness increase of 54%, and a shrink force of 100.5 g/cm (9 oz/in).

## EXAMPLE 7

To prepare a heat shrinkable adhesive tape, the shrinkable film as prepared in Example 6 was laminated to a rubber-based adhesive at a temperature below the melting point of the LPDE film in a calender while maintaining a tension on the film sufficient to over-come any axial shrinkage. The adhesive was formulated with regard to the available shrink force of the sheet at 150°C so that the forces exerted against constraints by the shrinkage of the film will force the adhesive into voids, crevices and the like during shrinkage on a pipe.

## EXAMPLE 8

This is a comparison example.

The film prepared in Example 2 was bilaterally irradiated in the manner described in Example 5 at 50 fpm (15.2 metres/min), 260 kV and 2.1 milliamps/in (0.83 milliamps/cm). The nominal dose was calculated at 14.5 MRad. The dose at the sheet midline was now calculated to be roughly equal to the surface dose. The irradiated surface of the sheet reached a temperature of 170°F (77°C) during each pass and emerged from the processor at about 130°F (54°C). When wrapped in the roll, the sheet temperature was between about 100 (37°C) and about 110°F (43°C) and it was allowed to cool before subjecting the opposed surface to irradiation. The $M^{100}$ (150°C) was measured at 16240 kg/m$^2$ (23.1 psi), the shrinkage force at 33.5 g/cm (3 oz/in), the axial shrinkage at 18%, and the transverse expansion at 8%. The modulus as in Example 5 was again higher than predicted because of the greater average dose, but the greater axial shrinkage was due to the inevitable stretching occurring in pulling the hot sheet through the electron beam processor. The shrink force and axial shrinkage (as in Example 5) were still not high enough for the contemplated usage as a shrink wrap without the further orientation step which follows.

## EXAMPLE 9

The irradiated sheet as prepared in Example 8 was subjected to a post drawing operation in the manner described in Example 6, except that the speed ratio of the rolls was 1.30. The sheet lost about 22% in thickness and 2% in width. With respect to the equation as described in Example 6, in the instant example the desired value of S was 38%, L/L$_o$ was 0.82, and D should accordingly be 1.32. In this example with D = 1.30 and L/L$_o$ = 0.82, the predicted value of S is 36.9. The measured value was 36.6 with a transverse expansion of 9%, a thickness increase of 41%, and a shrink force of 56 g/cm (5 oz/in).

EXAMPLE 10

A heat shrinkable adhesive tape was prepared from the shrinkable film of Example 9 according to the procedures described in Example 7.

From the foregoing description and illustrative examples it will thus be seen that the present invention provides an elegant procedure for the manufacture of heat shrinkable films and tapes which find particular utility as protective wraps for metal pipes and other tubular articles.

More specifically, the present invention is characterized by great efficiency, the use of very high surface dose rates and speed of manufacture without melting of the film or relaxing the inherent orientation. The calendering step of film manufacture, which as previously stated is a critical aspect of this invention, imparts about one-half of the eventual orientation which in turn permits the production of thinner sheets which can be irradiated faster with safer and less expensive irradiation. The stretching is simpler and faster, less draw is required (e.g. 30% vs. the usual 80-500% common to prior procedures) which in turn means less cross direction expansion on shrinking. No post stretching annealing is required. The opposed surfaces can be differentially treated where found desirable or expedient to do so. For example, one surface could be treated for release while the opposed surface to which the adhesive layer is to be applied could be treated to increase adhesion.

It will be appreciated that various changes may be made without departing from the invention described in the foregoing specification. For example, for purposes of illustration reference has been made to passing the film in the path of irradiation at a line speed of from about 30-40 feet per minute. However, it is visualized that line speeds on the order of about 10 to about 500 feet per minute (3 to 150 meters/min) may be employed. In like manner, while reference has been made to a surface dose of from about 15-20 Mrads with a penetrating potential of from about 150-300 kilovolts and a dose current of from 0.6 to 0.8 milliamps/cm width (about 1.6 to about 2.0 milliamps per inch width), generally speaking it is contemplated that one may employ a surface dose of from about 4 to about 20 Mrads with a penetrating potential of from about 150 to about 550 kilovolts and a dose current of from about 0.4 to about 6.0 milliamps per inch width (0.15 to 2.4 milliamps/cm width) of film to obtain the desired crosslinking.

Since certain changes may be made without departing from the scope of the invention herein involved, it is intended that all matter described in the foregoing specification, including the examples, shall be interpreted as illustrative and not in a limiting sense.

**Claims**

1. A process for preparing a heat shrinkable film which comprises forming a film of polyolefinic material, exposing both sides of the film to electron rays, and subjecting the film to orientation by stretching characterised in that the film of polyolefin material is made by calendering by

depositing a mass of polyolefinic material at the nip of the first and second rolls of a three-roll calender in which the second and third rolls rotate at approximately the same speed and the first roll rotates at a slower speed, the said first roll being heated to a temperature above the melting point of the said polyolefinic material, the said second roll is heated to an elevated temperature below the melting point of the said polyolefinic material, and the said third roll is chilled relative thereto;

extruding the said mass of polyolefinic material between the said first and second rolls to form a film adhering to the surface of the said second roll;

transporting the said film from the said second roll around the said third roll;

transporting the said film from the said third roll of the said calender under tension, whereby to effect partial orientation of the said film in the machine direction and to maintain substantially all the molecular orientation imparted to the said film during the calendering steps;

passing the said film in the path of irradiation from a low energy electron beam while subjecting one surface of the said film to the said irradiation at a voltage such that the radiation dose at the half-depth of the said film is approximately one-half the dose at the said irradiated surface and at a selected current to film speed ratio;

passing the said film in the path of irradiation from a low energy electron beam while subjecting the opposed surface of the said film to the said irradiation at a voltage and at a current to speed ratio substantially equal to that selected for the irradiation of the said one surface, such that the 100% modulus at 150°C of the said film as a whole is from 7000 to 70,000 Kg/m2 (about 10 to 100 pounds per square inch) and the said film is substantially uniformly cross-linked throughout its thickness; and

molecularly orientating the said film by stretching in the machine direction to provide a shrinkability of at least 25 percent upon heating the said film in an absence of constraints.

2. A process as claimed in claim 1 characterised in that the speed ratio of rotation of said second roll to said first roll of said three-roll calender is from 10:1 to about 325:1.

3. A process as claimed in claim 1 or claim 2 characterised in that the said first roll is heated to a temperature of at least 270°F (130°C).

4. A process as claimed in claim 1, 2 or 3 characterised in that the said third roll is at a temperature of from about 50 to about 70°F (10 to 21°C).

5. A process as claimed in any one of claims 1 to 4 characterised in that the said film is cooled to a temperature no higher than about 100°F (37°C) before subjecting the said opposed surface to the said irradiation.

6. A process as claimed in any one of claims 1 to 5 characterised in that the line speed of the said film passing in the path of irradiation for each said surface irradiation step is from about 10 to about 500 feet per minute (3 to 150 metres/min).

7. A process as claimed in any one of claims 1 to 6 characterised in that each said surface dose is from about 4 to about 20 Mrads with a penetrating potential of from about 150 to about 550 kilovolts and a dose current of from about 0.4 to about 6.0 milliamps per inch width (0.15 to 2.4 milliamps/cm width) of the said film.

8. A process as claimed in any one of claims 1 to 7 including the step of applying a layer of adhesive to the said film, whereby to form a heat shrinkable adhesive tape.

9. A metal pipe provided with a protective wrap comprising a film made by a process as claimed in any one of claims 1 to 7 or a tape made by a process as claimed in claim 8.

**Patentansprüche**

1. Verfahren zur Herstellung einer wärmeschrumpfbaren Folie, bei dem eine Folie aus Polyolefinmaterial gebildet wird, beide Folienseiten Elektronenstrahlen ausgesetzt werden und die Folie durch Recken der Orientierung unterworfen wird, dadurch gekennzeichnet, daß die Folie aus Polyolefinmaterial durch Kalandern durch Auftragen einer Menge des Polyolefinmaterials am Spalt zwischen der ersten und zweiten Walze eines Dreiwalzen-Kalanders hergestellt wird, dessen zweite und dritte Walze mit angenähert derselben Drehzahl rotieren und dessen erste Walze mit geringerer Drehzahl rotiert sowie auf eine Temperatur über dem Schmelzpunkt des Polyolefinmaterials erwärmt wird, wobei die zweite Walze auf eine erhöhte Temperatur unter dem Schmelzpunkt des Polyolefinmaterials erwärmt wird und die dritte Walze diesbezüglich gekühlt wird, daß die Menge des Polyolefinmaterials zwischen der ersten und zweiten Walze extrudiert und zu einer an der Oberfläche der zweiten Walze haftenden Folie geformt wird, daß die Folie von der zweiten Walze rund um die dritte Walze transportiert wird, daß die Folie von der dritten Walze des Kalanders unter Spannung abtransportiert wird, um eine teilweise Orientierung der Folie in Maschinenrichtung zu bewirken und im wesentlichen die gesamte, der Folie während der Kalanderschritte verliehene molekulare Orientierung aufrechtzuerhalten, daß die Folie in den Strahlengang eines niederenergetischen Elektronenstrahles geleitet wird, während die eine Folienoberfläche der Strahlung bei einer derartigen Spannung, daß die Strahlendosis in halber Tiefe der Folie angenähert die halbe Dosis an der bestrahlten Oberfläche ist, und einem ausgewählten Verhältnis von Strom zu Foliengeschwindigkeit ausgesetzt wird, daß die Folie in den Strahlengang eines niederenergetischen Elektronenstrahles geleitet wird, während die gegenüberliegende Folienoberfläche derart der Strahlung bei einer Spannung und einem Verhältnis von Strom zu Foliengeschwindigkeit ausgesetzt wird, die im wesentlichen gleich den zur Bestrahlung der einen Oberfläche ausgewählten sind, daß der 100%-Modul bei 150°C der Folie insgesamt zwischen 7 000 und 70 000 kg/m$^2$ (etwa 10 und 100 Pfund je Quadratzoll) liegt und die Folie im über ihre Dicke wesentlichen gleichmäßig vernetzt wird, und daß die Folie durch Recken in Maschinenrichtung molekular orientiert wird, um eine Schrumpffähigkeit von wenigstens 25% bei Erwärmung der Folie ohne Beschränkungen zu schaffen.

2. Verfahren nach Anspruch 1, dadurch gekennzeichnet, daß das Drehzahlverhältnis zwischen der zweiten und der ersten walze des Dreiwalzen-Kalanders von 10:1 bis etwa 325:1 reicht.

3. Verfahren nach Anspruch 1 oder 2, dadurch gekennzeichnet, daß die erste Walze auf eine Temperatur von mindestens 270°F (130°C) erwärmt wird.

4. Verfahren nach den Ansprüchen 1, 2 oder 3, dadurch gekennzeichnet, daß sich die dritte Walze auf einer Temperatur von etwa 50 bis etwa 70°F (10 bis 21°C) befindet.

5. Verfahren nach den Ansprüchen 1 bis 4, dadurch gekennzeichnet, daß die Folie auf eine Temperatur von höchstens etwa 100°F (37°C) gekühlt wird, bevor die gegenüberliegende Oberfläche der Strahlung ausgesetzt wird.

6. Verfahren nach den Ansprüchen 1 bis 5, dadurch gekennzeichnet, daß die Vorschubgeschwindigkeit der in den Strahlengang geleiteten Folie bei jedem Oberflächenbestrahlungsschritt etwa 10 bis etwa 500 Fuß je Minute (3 bis 150 Meter/min) beträgt.

7. Verfahren nach den Ansprüchen 1 bis 6, dadurch gekennzeichnet, daß jede Oberflächendosis bei einem Eindringpotential von etwa 150 bis etwa 550 Kilovolt und einem Dosisstrom von etwa 0,4 bis etwa 6,0 Milliampere je Zoll Breite (0,15 bis 2,4 Milliampere/cm Breite) der Folie etwa 4 bis etwa 20 Mrad beträgt.

8. Verfahren nach den Ansprüchen 1 bis 7, gekennzeichnet durch den Schritt des Auftragens einer Klebeschicht auf die Folie zur Bildung eines wärmeschrumpfbaren Klebebandes.

9. Metallrohr mit einer Schutzhülle, bestehend aus einer mit dem Verfahren nach den Ansprüchen 1 bis 7 hergestellten Folie oder einem mit dem Verfahren nach Anspruch 8 hergestellten Band.

## Revendications

1. Procédé de préparation d'un film thermorétractable qui comprend les étapes consistant à former un film de matériau polyoléfinique, exposer les deux faces du film à des rayons électroniques, et soumettre le film à une orientation par étirage caractérisé en ce que le film en matériau de polyoléfine est fabriqué par calandrage en

déposant une quantité de matériau polyoléfinique dans l'espacement entre les premier et second rouleaux d'une calandre à trois rouleaux dans laquelle les second et troisième rouleaux tournent approximativement à la même vitesse et le premier rouleau tourne à une vitesse plus lente, ledit premier rouleau étant chauffé à une température supérieure au point de fusion dudit matériau polyoléfinique, ledit second rouleau est chauffé à une température élevée inférieure au point de fusion dudit matériau polyoléfinique, et ledit troisième rouleau est refroidi relativement aux deux autres;

extrudant ladite masse de matériau polyoléfinique entre lesdits premier et second rouleaux pour former un film adhérent à la surface dudit second rouleau;

entraînant ledit film à partir dudit second rouleau autour dudit troisième rouleau;

transportant ledit film à partir dudit troisième rouleau de ladite calandre en extension, pour ainsi effectuer une orientation partielle dudit film dans la direction de la machine et pour conserver sensiblement toute l'orientation moléculaire communiquée audit film pendant les étapes de calandrage;

faisant passer ledit film dans la trajectoire d'irradiation d'un faisceau électronique à basse énergie tout en soumettant une surface dudit film à ladite irradiation sous une tension électrique de sorte que la dose d'irradiation à la demi-profondeur dudit film est égale approximativement à la moitié de la dose à ladite surface irradiée, et dans un rapport déterminé du courant par rapport à la vitesse du film;

faisant passer ledit film dans la trajectoire d'irradiation d'un faisceau électronique à basse énergie tout en soumettant la surface opposée dudit film à ladite irradiation sous une tension électrique et dans un rapport du courant par rapport à la vitesse sensiblement égal à celui sélectionné pour l'irradiation de ladite première surface, de sorte que le module à 100% d'allongement à 150°C dudit film pris dans sa totalité est compris entre 7 000 et 70 000 kg/m² (entre environ 10 et 100 livres par pouce carré) et que ledit film est réticulé à peu près uniformément dans toute son épaisseur; et

orientant ledit film au niveau moléculaire en l'étirant dans la direction de la machine pour fournir une rétractabilité d'au moins 25% lors du chauffage dudit film en l'absence de contraintes.

2. Procédé selon la revendication 1 caractérisé en ce que le rapport des vitesses de rotation dudit second rouleau par rapport audit premier rouleau de ladite calandre à trois rouleaux est compris entre 10:1 et environ 325:1.

3. Procédé selon la revendication 1 ou la revendication 2 caractérisé en ce que ledit premier rouleau est chauffé à une température d'au moins 270°F (130°C).

4. Procédé selon les revendications 1, 2 ou 3 caractérisé en ce que ledit troisième rouleau est à une température comprise entre environ 50 et environ 70°F (entre 10 et 21°C).

5. Procédé selon l'une quelconque des revendications 1 à 4 caractérisé en ce que ledit film est refroidi à une température non supérieure à environ 100°F (37°C) avant de soumettre ladite surface opposée à ladite irradiation.

6. Procédé selon l'une quelconque des revendications 1 à 5 caractérisé en ce que la vitesse linéaire dudit film passant dans la trajectoire d'irradiation lors de chacune desdites étapes d'irradiation de surface est comprise entre environ 10 et environ 500 pieds à la minute (entre 3 et 150 mètres/min.).

7. Procédé selon l'une quelconque des revendications 1 à 6 caractérisé en ce que chacune desdites doses de surface est comprise entre environ 4 et environ 20 Mrads avec un potentiel de pénétration compris entre environ 150 et environ 550 kilovolts et un courant de dose compris entre environ 0,4 et environ 6,0 milliampères par pouce de largeur (entre 0,15 et 2,4 milliampères par centimètre de largeur) dudit film.

8. Procédé selon l'une quelconque des revendications 1 à 7 comprenant l'étape consistant à appliquer une couche d'adhésif sur ledit film, pour former ainsi un ruban adhésif thermorétractable.

9. Tube métallique muni d'une enveloppe de protection comprenant un film fabriqué par un procédé selon l'une quelconque des revendications 1 à 7 ou ruban fabriqué par un procédé selon la revendication 8.